# EUROPÄISCHE PATENTSCHRIFT

(11) **EP 0 386 567 B1**
(45) Veröffentlichungstag und Bekanntmachung des Hinweises auf die Patenterteilung: **20.07.1994**
(21) Anmeldenummer: 90103654.1
(22) Anmeldetag: 26.02.1990
(51) Int. Cl.: B24B 9/00

(54) **Entgrateinrichtung für Werkstücke aus duroplastischem Faserverbundwerkstoff**
Apparatus for deburring work pieces made of thermosetting composite fibre material
Dispositif d'ébavurage pour pièces en matériau fibreux thermodurcissable

(30) Priorität: 10.03.1989 DE 3907726
(43) Veröffentlichungstag der Anmeldung: 12.09.1990
(73) Patentinhaber: FIBRON Gesellschaft mit beschränkter Haftung, D-75015 Bretten (DE)
(72) Erfinder: Brüssel, Richard, Dipl.-Ing., D-7519 Sulzfeld (DE)
(74) Vertreter: Durm, Klaus, Dr.-Ing.

(56) Entgegenhaltungen:
- EP-A- 0 167 841
- US-A- 1 862 194
- WERKSTATTSTECHNIK, ZEITSCHRIFT FUR INDUSTRIELLE FERTIGUNG. vol. 74, no. 3, März 1984, BERLIN DE Seiten 135 - 136; "Entgraten von Leichtmetallfelgen mit Industrierobotern"

## Beschreibung

Die Erfindung bezieht sich auf eine Entgrateinrichtung für Werkstücke aus duroplastischem Faserverbundwerkstoff, mit einem umlaufenden und in Längsrichtung der Entgratfläche beweglichen Entgratwerkzeug.

Beim Entgraten von Werkstücken aus duroplastischem Faserverbundwerkstoff haben bisher überwiegend von Hand geführte Schwingschleifer Verwendung gefunden. Bedingt durch Verzugstoleranzen, Schwindungstoleranzen und fertigungstechnische Einflüsse liegt die Gratwurzel derartiger Werkstücke nicht auf einer vorher bestimmbaren Bahn. Die an sich wünschenswerte automatische Bearbeitung - die eine empfindliche und aufwendige Regel- und Antriebstechnik voraussetzt - hat sich daher noch nicht wirtschaftlich verwirklichen lassen.

Es ist eine Vorrichtung zum Entgraten der inneren Kante einer Bohrung eines Werkstückes bekannt, welche eine Schleifspindeleinheit aufweist, in welche ein als umlaufender, elastischer Schleifstift ausgebildetes Schneidwerkzeug eingesetzt ist, das in Längsrichtung der zu entgratenden Kante bewegt wird. Dieses Entgratwerkzeug wird bezüglich der Längsrichtung der zu entgratenden Kante schrägstehend nachgiebig an dieser in Anlage gehalten und während des Arbeitsvorganges quer zur Kante laufend hin- und her bewegt. Jedoch führt dieses Verfahren bei Faserverbundwerkstoffen nicht zu dem gewünschten Ergebnis, da die Werkstückstellen mit starker Gratausbildung nicht oder nicht ausreichend sauber entgratet werden und an den beinahe gratfreien Werkstückstellen die durch den Entgratvorgang erzeugte Anfasung unerwünscht groß ausfällt EP-A-0 167 841.

Ausgehend von dem erwähnten Stand der Technik liegt der Erfindung die Aufgabe zugrunde, eine für Werkstücke aus duroplastischem Faserverbundwerkstoff geeignete Entgrateinrichtung anzugeben, welche nicht nur die einwandfreie Entgratung ermöglicht, sondern auch eine nicht hinzunehmende, starke Anfasung vermeidet. Diese Entgrateinrichtung soll dabei möglichst wenig störanfällig und in technischer Hinsicht möglichst wenig aufwendig ausgestaltet sein (d.h. ohne aufwendige Sensor-, Regel- und Antriebstechnik auskommen).

Die gestellte Aufgabe wird durch eine Entgrateinrichtung mit den Merkmalen des Anspruchs 1 gelöst.

Der Kerngedanke der Erfindung besteht danach darin, als Entgratwerkzeug einen stumpfen, rotierenden Entgratstift einzusetzen. Als stumpf im Sinne dieses Vorschlags ist jeder Entgratstift anzusehen, dessen Oberfläche nicht als Schneidteil ausgebildet ist, also keine Schneiderhebungen oder Schneidvorsprünge aufweist. Der Einsatz eines stumpfen Entgratstiftes hat zur Folge, daß auch an den Werkstückstellen mit geringer Gratbildung allenfalls eine hinnehmbare Anfasung erzeugt wird. Als Schleifmittel werden dabei die Füllstoffe und die Glasfasern der zu beseitigenden Gratwurzel genutzt. Durch eine geeignete Winkelanordnung des Entgratstiftes bezüglich der Entgratfläche wird der Grat umgebogen, so daß nur die Gratwurzel gebrochen bzw. zerrieben werden muß; darüber hinaus läßt sich dadurch die Gefahr zumindest herabsetzen, daß die Werkstückkanten ausbrechen.
Bei einer bevorzugten Ausführungsform besteht der Entgratstift aus Hartmetall; er kann jedoch auch aus einem anderen (insbesondere auch metallischen) Werkstoff bestehen, der für die Bearbeitung der hier angesprochenen duroplastischen Faserverbundwerkstoffe geeignet ist.
Vorzugsweise ist der Entgratstift bezüglich der Entgratfläche raumschief ausgerichtet, d.h. sowohl in waagerechter als auch in lotrechter Richtung schräg gestellt (Anspruch 2).
Die Ausrichtung sollte dabei in der Weise erfolgen, daß der Entgratstift bezüglich der Entgratfläche entgegen der Vorschubrichtung der Entgrateinrichtung schräg gestellt ist (Anspruch 3). Die erforderliche Beweglichkeit und Ausrichtung des Entgratstiftes läßt sich dadurch verwirklichen, daß dieser in einem Gehäuse aufgenommen ist, das schwenkbar und querverschiebbar an einem entlang einer Führungsbahn verfahrbaren Schlitten gehalten ist (Anspruch 4). Die Führungsbahn ist dabei dem theoretischen Verlauf der Gratwurzelbahn angepaßt; sie verläuft also im einfachsten Fall geradlinig. Um die Wirkung des Entgratstiftes zu vergleichmässigen, ist dieser mit einem Andrückelement ausgestattet, das eine einstellbare, annähernd konstante Andrückkraft erzeugt (Anspruch 5). Das erforderliche Andrückmoment läßt sich im einfachsten Fall durch eine exzentrische Aufhängung des schwenkbaren Gehäuses verwirklichen, welches den Entgratstift aufnimmt.
Eine andere besonders einfache Ausführungsmöglichkeit besteht in der Verwendung eines Federelements mit einstellbarer Vorspannkraft. Das Federelement (beispielsweise eine mechanische Feder oder eine Pneumatikfeder) kann insbesondere auch in der Weise ausgelegt sein, daß sich die Andrückkraft der Schrägstellung des Entgratstiftes anpaßt, die sich während der Changierbewegung fortlaufend ändert.

Insbesondere für die Bearbeitung von Werkstücken mit gekrümmt verlaufenden Kanten bzw. Entgratflächen ist der Entgratstift mit Antrieb und Federung an einer Mehrachsenvorrichtung geführt (Anspruch 6); diese besteht vorzugsweise aus einem Roboter oder einer NC-Einheit.
Um Füllstoffe und/oder Faserreste speichern zu können, ist der stumpfe Entgratstift zweckmäßig mit Ausnehmungen ausgestattet (Anspruch 7); diese erstrecken sich von der Umfangsfläche her ins Stiftinnere und sind - im Querschnitt gesehen - insbesondere U- oder V-förmig ausgebildet.
Die Erfindung wird nachfolgend anhand eines Ausführungsbeispiels im einzelnen erläutert.

Es zeigen:
- Fig. 1: stark schematisiert einen vertikalen Teilschnitt durch eine Werkstückaufnahme nebst Werkstück sowie eine Seitenansicht der zugehörigen Entgrateinrichtung,
- Fig. 2: stark schematisiert eine Draufsicht auf die Anordnung nach Fig. 1 und
- Fig. 3: ein Schnitt durch einen als Entgratwerkzeug dienenden Hartmetallstift.

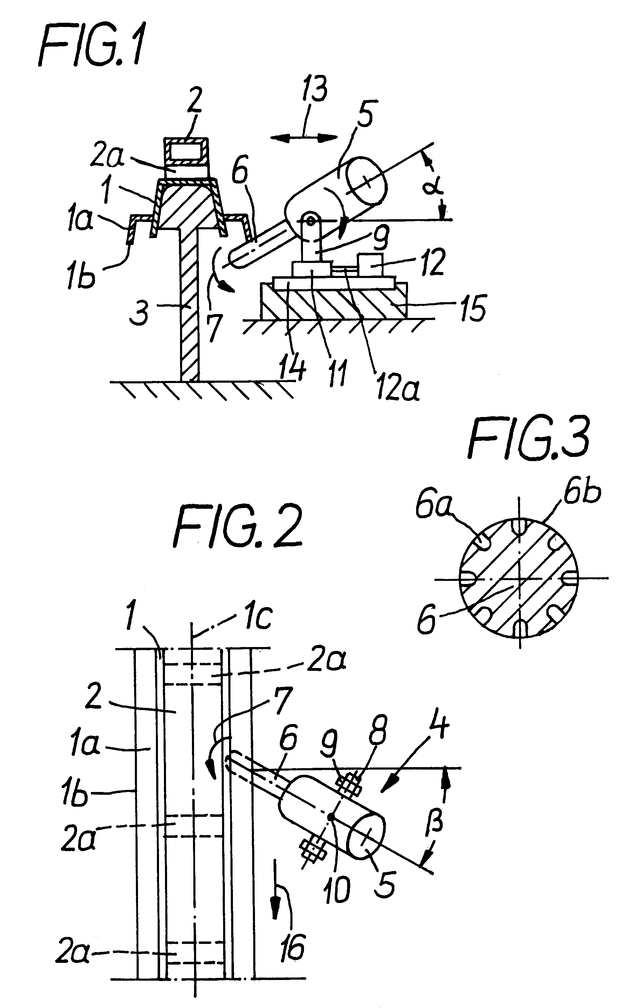

Das zu bearbeitende Werkstück aus duroplastischem Faserverbundwerkstoff ist als Leuchtengehäuse 1 ausgebildet, welches im Querschnitt gesehen im wesentlichen rinnenförmig ausgebildet ist und zwei seitlich vorspringende Sichtflächen 1a aufweist, deren Unterkante 1b die Entgratfläche darstellt. Das Werkstück 1 wird mittels einer Klemmeinrichtung in Form eines Hohlbalkens 2 mit mehreren Klemmabschnitten 2a auf einer ortsfesten Werkstückaufnahme 3 festgehalten (Fig. 1).

Die Entgrateinrichtung 4 weist als Haupbestandteile ein Gehäuse 5 auf, in dem ein stumpfer Hartmetallstift 6 über einen nichtdargestellten Motor im Gegenuhrzeigersinn (Pfeil 7) drehbar gehalten ist. Das Gehäuse 5 ist um eine waagerechte Achse 8 schwenkbar in einem Rahmen 9 aufgehängt, der seinerseits um eine lotrechte Achse 10 winkeleinstellbar mit einer Konsole 11 in Verbindung steht. Diese führt unter Einwirkung eines Changierantriebs 12 mit Verbindungsstange 12a (beispielsweise in Form eines motorisch angetriebenen Exenters) bezüglich des Werkstücks 1 Querbewegungen im Sinne des Doppelpfeils 13 aus. Das Gehäuse 5 mit Rahmen 9, die Konsole 11 und der Changierantrieb 12 mit Verbindungsstange 12a sind auf einem Schlitten 14 angebracht, der in einer ortsfesten Führungsbahn 15 parallel zur Werkstücklängsachse 1c (vergl . Fig. 2) verfahrbar ist.
Die Vorschubrichtung der Entgrateinrichtung 4 ist in Fig. 2 durch den Pfeil 16 angedeutet. In der Betriebsstellung ist der Hartmetallstift bezüglich der zu bearbeitenden Entgratfläche 1b raumschief ausgerichtet, d.h. er ist - in der Seitenansicht gesehen (Fig. 1) - bezüglich der Entgratfläche 1b unter einem spitzen Winkel α nach unten geneigt und - in der Draufsicht betrachtet (Fig. 2) - bezüglich einer Querlinie zur Entgratfläche 1b unter einem spitzen Winkel β entgegen der Vorschubrichtung (Pfeil 16) schräggestellt.
Bedingt durch die zuvor beschriebene Ausrichtung des Hartmetallstiftes 6 wird einerseits die gewünschte Entgratwirkung erzielt, andererseits jedoch an den beinahe gratfreien Stellen der Entgratfläche 1b keine zu große Anfasung hervorgerufen.
Die erforderliche Andrückkraft des Hartmetallstiftes wird in dem dargestellten Ausführungsbeispiel dadurch erzeugt, daß das auch den Hartmetallstiftantrieb aufnehmende Gehäuse 5 sich über die Drehachse 8 exentrisch an dem Rahmen 9 abstützt, der seinerseits über die bereits erwähnte Drehverbindung an der Konsole 11 befestigt ist.
Durch die über den Changierantrieb 12, die Verbindungsstange 12a, die Konsole 11 von dem Rahmen 9 auf das Gehäuse 5 übertragene Changierbewegung (Doppelpfeil 13 in Fig. 1) wird die Beanspruchung des Hartmetallstiftes 6 über einen größeren Bereich verteilt und dadurch die Standzeit des Hartmetallstiftes erhöht. Um Füllstoffe und/oder Faserreste speichern zu können, weist der Hartmetallstift 6 im Querschnitt U-förmige Ausnehmungen (oder Vertiefungen) 6a auf, die von seiner Umfangsfläche 6b ausgehen und radial ausgerichtet sind (Fig. 3).
Der mit der Erfindung erzielte Vorteil besteht insbesondere darin, daß ohne erheblichen technischen Aufwand selbsttätig im wesentlichen nur an den gratbehafteten Werkstückstellen die gewünschte Bearbeitung unter Bildung einer Anfasung erfolgt.
Die beschriebene Entgrateinrichtung kann zumindest in den Fällen den Entgratvorgang automatisieren, in denen größere Stückzahlen geometrisch einfach aufgebauter Werkstücke aus duroplastischem Faserverbundwerkstoff zu bearbeiten sind.

## Patentansprüche

1. Entgrateinrichtung für Werkstücke aus duroplastischem Faserverbundwerkstoff, mit einem umlaufenden und in Längsrichtung einer Entgratfläche beweglichen Entgratwerkzeug, bestehend aus einem rotierenden Entgratstift (6), der bezüglich der Längsrichtung der Entgratfläche (1b) schrägstehend nachgiebig an dieser in Anlage gehalten ist und während des Entgratvorganges bezüglich der Längsrichtung der Entgratfläche (1b) quer verlaufende Changierbewegungen (13) ausführt, **dadurch gekennzeichnet,** daß die Oberfläche des stumpfen Entgratstiftes (6) ohne Schneiderhebungen oder Schneidvorsprünge, nicht als Schneidteil ausgebildet ist.

2. Einrichtung nach Anspruch 1, dadurch gekennzeichnet, daß der Entgratstift (6) bezüglich der Entgratfläche (1b) raumschief, d.h. sowohl in waagerechter als auch in lotrechter Richtung schräggestellt ist (Winkel β bzw. α).

3. Einrichtung nach zumindest einem der Ansprüche 1 bis 2, dadurch gekennzeichnet, daß der Entgratstift (6) bezüglich der Entgratfläche (1b) entgegen der Vorschubrichtung (Pfeil 16) schräggestellt ist.

4. Einrichtung nach zumindest einem der Ansprüche 1 bis 3, dadurch gekennzeichnet, daß der Entgratstift (6) in einem Gehäuse (5) aufgenommen ist, das schwenkbar und querverschiebbar an einem entlang einer Führungsbahn (15) verfahrbaren Schlitten (14) gehalten ist.

5. Einrichtung nach zumindest einem der Ansprüche 1 bis 4, dadurch gekennzeichnet, daß der Entgratstift (6) mit einem Andrückelement ausgestattet ist, das eine einstellbare, annähernd konstante Andrückkraft erzeugt.

6. Einrichtung nach zumindest einem der Ansprüche 1 bis 5, dadurch gekennzeichnet, daß der Entgratstift (6) nebst Antrieb und Federung an einer Mehrachsenvorrichtung geführt ist.

7. Einrichtung nach zumindest einem der Ansprüche 1 bis 6, dadurch gekennzeichnet, daß der Entgratstift (6) von seiner Umfangsfläche (6b) ausgehende Ausnehmungen (6a) aufweist.

## Claims

1. Device for deburring workpieces made of thermosetting composite fibre material, having a rotating deburring tool that is movable in the longitudinal direction of a face to be deburred and comprises a rotating deburring rod (6) which, with respect to the longitudinal direction of the face to be deburred (1b), is held so that it is inclined and in flexible contact with that face and, during the deburring operation, performs jigging movements (13) transversely to the longitudinal direction of the face to be deburred (1b), characterised in that the surface of the blunt deburring rod (6), having no raised cutting portions and no cutting projections, is not constructed as a cutting component.

2. Device according to claim 1, characterised in that the deburring rod (6) is spatially tilted with respect to the face to be deburred (1b), that is to say, it is inclined both in the horizontal and in the vertical direction (angles β and α).

3. Device according to at least one of claims 1 and 2, characterised in that the deburring rod (6) is inclined with respect to the face to be deburred (1b) counter to the direction of advance (arrow 16).

4. Device according to at least one of claims 1 to 3, characterised in that the deburring rod (6) is accommodated in a housing (5) that is supported so that it can be pivoted and displaced transversely on a slide (14) that can be moved along a guide path (15).

5. Device according to at least one of claims 1 to 4, characterised in that the deburring rod (6) is equipped with a pressing element that generates an adjustable, virtually constant pressing force.

6. Device according to at least one of claims 1 to 5, characterised in that the deburring rod (6), with drive and spring mounting, is guided on a multi-axis apparatus.

7. Device according to at least one of claims 1 to 6, characterised in that the deburring rod (6) has recesses (6a) extending from its circumferential face (6b).

## Revendications

1. Dispositif d'ébavurage pour pièces en matériau composite thermodurcissable renforcé par des fibres, avec un outil d'ébavurage rotatif et mobile dans le sens longitudinal de la surface à ébavurer, composé d'une tige d'ébavurage (6) rotative qui, par rapport au sens longitudinal de la surface à ébarber (1b), est maintenue à l'oblique au contact de cette dernière, d'une manière flexible, et exécute pendant l'opération d'ébavurage des mouvements de va-et-vient (13) transversaux permanents, par rapport au sens longitudinal de la surface à ébarber (1b), caractérisé en ce que la surface de la tige d'ébavurage émoussée (6) est réalisée sans bosse ou saillie de coupe, et non sous forme d'élément tranchant.

2. Dispositif suivant la revendication 1, caractérisé en ce que la tige d'ébavurage (6) a une orientation de biais dans l'espace par rapport à la surface à ébavurer (1b), c'est-à-dire est placée à l'oblique, aussi bien dans le sens horizontal que dans le sens vertical (angle bêta et/ou alpha).

3. Dispositif suivant l'une quelconque, au moins, des revendications 1 à 2, caractérisé en ce que la tige d'ébavurage (6) est placée à l'oblique, par rapport à la surface à ébavurer (1b), dans le sens contraire au sens d'avance (flèche 16).

4. Dispositif suivant l'une quelconque, au moins, des revendications 1 à 3, caractérisé en ce que la tige d'ébavurage (6) est logée dans un carter (5), maintenu avec une possibilité de pivotement et de déplacement transversal sur un chariot (14), mobile le long d'une glissière (15).

5. Dispositif suivant l'une quelconque, au moins, des revendications 1 à 4, caractérisé en ce que la tige d'ébavurage (6) est équipée d'un élément de pression, qui produit une force de serrage réglable, à peu près constante.

6. Dispositif suivant l'une quelconque, au moins, des revendications 1 à 5, caractérisé en ce que la tige d'ébavurage (6), avec la commande et la suspension élastique, est guidée sur un dispositif multiaxes.

7. Dispositif suivant l'une quelconque des revendications 1 à 6, du moins, caractérisé ce que la tige d'ébavurage (6) présente des évidements (6a) qui partent de sa surface périphérique (6b).
